(19) Europäisches Patentamt
European Patent Office
Office européen des brevets

(11) **EP 3 111 259 B1**

(12) **EUROPEAN PATENT SPECIFICATION**

(45) Date of publication and mention
of the grant of the patent:
**23.10.2024 Bulletin 2024/43**

(21) Application number: **14708222.6**

(22) Date of filing: **24.02.2014**

(51) International Patent Classification (IPC):
$G02B\ 5/08$ (2006.01)   $H01S\ 3/04$ (2006.01)
$G02B\ 5/09$ (2006.01)   $G02B\ 5/18$ (2006.01)
$H01S\ 3/081$ (2006.01)   $H01S\ 3/109$ (2006.01)

(52) Cooperative Patent Classification (CPC):
**G02B 5/1861; H01S 3/0057; H01S 3/0812;**
H01S 3/109

(86) International application number:
**PCT/EP2014/053547**

(87) International publication number:
**WO 2015/124216 (27.08.2015 Gazette 2015/34)**

(54) **GRATING MIRROR**

GITTERSPIEGEL

MIROIR AVEC RÉSEAU DE DIFFRACTION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**04.01.2017 Bulletin 2017/01**

(73) Proprietor: **UNIVERSITÄT STUTTGART INSTITUT
FÜR STRAHLWERKZEUGE
70569 Stuttgart (DE)**

(72) Inventors:
• **RUMPEL, Martin
71229 Leonberg (DE)**
• **ABDOU AHMED, Marwan
70565 Stuttgart (DE)**

(74) Representative: **Pfiz/Gauss Patentanwälte
PartmbB
Tübinger Strasse 26
70178 Stuttgart (DE)**

(56) References cited:
WO-A2-02/101895   US-A- 5 907 436
US-A1- 2006 152 809   US-A1- 2009 034 576
US-A1- 2009 059 375   US-A1- 2009 116 790
US-A1- 2011 122 896   US-B1- 6 219 478

**Description**

The invention is defined in the claims and relates to a grating mirror comprising a substrate having a first and a second surface on opposite sides thereof, a reflector arranged on the first surface of said substrate and comprising a stack of reflector layers with high refractive index layers and low refractive index layers stacked in alternating arrangement, a grating arrangement on a side of said reflector opposite to said substrate, said grating comprising a stack of grating layers with at least one high refractive index grating layer and at least one low refractive index grating layer stacked in alternating arrangement.

Grating mirrors showing the aforementioned features are known from the prior art.

Prior art documents include US2009/116790, US 6 219 478 B1 and US 2006/152809.

These known grating mirrors are difficult to manufacture if a high diffraction efficiency shall be obtained.

In particular known grating mirrors are very sensitive to variations in design parameters.

It is the object of the invention to define a grating mirror providing a high diffraction efficiency and showing a good design tolerance in order to allow cost efficient manufacturing of such grating mirror.

This object is solved by a grating mirror as defined above according to which the grating layers have grooves etched from a top surface into said stack of grating layers with an etching depth between 40 nm or more and 300 nm or less in order to obtain a waveguide grating structure.

The advantage of the present invention has to be seen in the fact that such a grating mirror shows a high diffraction efficiency in particular when used under Littrow conditions and also shows a high design tolerance in particular with respect to the etching depth.

According to one advantageous embodiment said stack of grating layers comprises at least two grating layers. These grating layers are designed according to an optimum diffraction efficiency.

In order to maintain the high design tolerance it is of advantage if said stack of grating layers comprises three grating layers at maximum.

However, an advantageous embodiment of the grating mirror comprises a stack of grating layers having only two grating layers.

With respect to the etching of the grating layers no further details have been defined.

One advantageous solution provides that said stack of grating layers has at least a top layer etched said top layer being arranged on a side of said stack opposite to said reflector.

This solution comprises a design according to which said top layer is partially etched.

A further advantageous solution provides that said stack of grating layers has said top layer fully etched so that the grooves fully penetrate the top layer.

With respect to the extension of the grooves in the layer below the top layer no further definitions have been given.

A further advantageous solution provides that said stack of grating layers has said top layer fully etched and said layer below said top layer at least partially etched.

However, the etching can also be done in accordance with another advantageous embodiment such that said stack of grating layers has said top layer and said layer below said top layer fully etched.

It is even possible in another embodiment that said grooves extent into an uppermost layer of said reflector.

In order to obtain the advantageous reflection behavior, in particular the high diffraction efficiency, a feature defined in claim 1 provides that an evanescent radiation field of incident radiation extents into said grating layers and upper layers of said reflector forming a waveguide for said incident radiation field with a direction of guidance extending parallel to said top surface of said stack of grating layers so that the grating mirror acts as a waveguide grating.

The upper layers of said reflector are primarily the upper three or four layers arranged close to said stack grating layers.

According to a further advantageous solution said grating has an aspect ratio between 0,14 and 1,1 in order to obtain the desired high design tolerances of said grating mirror.

The aspect ratio is defined by the lateral width of the grooves of said grating divided by the depth of the respected grooves.

In connection with the embodiments explained before the thickness of the grating layers has been not defined further.

One advantageous solution provides that the grating layers have a thickness between 5 nm and 200 nm.

In particular it is advantageous if the top grating layer has a thickness between 5 nm and 200 nm depending on the order of diffraction at a certain wavelength for which the grating is designed, the duty cycle and the grating period.

Further it is of advantage if the bottom grating layer has a thickness between 5 nm and 200 nm.

Specific adaptions of the thickness of the top grating layer and the other grating layers comprising the bottom grating layer have been made in accordance with the Littrow conditions under which the grating is used, in particular in accordance with the order of diffraction of the Littrow conditions under which the grating is used, the grating period and the duty cycle of the gratings.

One advantageous solution provides adaption of the grating layers for the minus first order of diffraction of the Littrow conditions.

Further according to the present invention the periodicity of the grating has not been specified further.

One advantageous solution provides that the grating has a periodicity between 520 nm and 860 nm.

Further the duty cycle has not been specified. One advantageous solution provides that the grating has a duty cycle between 0,19 and 0,66.

In connection with the various embodiments explained before no further details have been given with respect to the thickness of the reflector layers.

One embodiment provides that the reflector layers have a thickness between 100 nm and 250 nm.

In particular the reflector layers are dimensioned to have a thickness corresponding essentially to a quarter of the wavelength to be reflected, taking into consideration the angle of incidence of the wavelength to be reflected with respect to the planer extension of the reflector layers.

Till now the material, from which the grating layers and the reflector layers have been made has not been specified in detail.

According to an advantageous solution the grating layers and the reflecting layers comprise $Ta_2O_5$, $HfO_2$, $Nb_2O_5$, $TiO_2$, $Al_2O_3$, $Si_3N_4$ and a:Si as high refractive index material and $SiO_2$, $MgF_2$ as low refractive index materials.

The grating mirror design can be transferred to any wavelength region where resonant waveguide gratings can be realized such as the $10\mu m$ domain for CO2 lasers by choosing suitable materials for quarterwave layers and grating layers and adapting the grating profiled.

The invention also relates to a laser system having a laser cavity defining a cavity radiation field extending along an optical axis between cavity end mirrors of said cavity and a laser active material arranged to be penetrated by said cavity radiation field.

It is the object of such a laser system to have the cavity radiation field stabilized with respect to its polarization and its wavelength.

This object is solved by a laser system showing the aforementioned features and having at least one of said cavity mirrors being a grating mirror according to one or more the aforementioned features and arranged in Littrow mount with respect to the optical axis of said cavity radiation field.

Such a cavity mirror provides the advantageous features such that it stabilizes the polarization and stabilizes the wavelength of said radiation field in a cost effective design.

In particular said cavity mirror can be an end mirror.

However, said cavity mirror can also be an output coupler.

Another advantageous solution provides that a second harmonic generator is arranged in said cavity radiation field and so that a second harmonic radiation field is generated in said laser cavity.

In particular such second harmonic radiation field can be easily coupled out from said laser cavity so that the laser system enables easy generation of a second harmonic radiation field in addition to said cavity radiation field.

The invention also relates to a pulse stretching device and/or a pulse compression device using at least one diffraction grating for separating the wavelengths within a laser pulse.

It is the object of the present invention to provide such a pulse stretching device and/or such a pulse compression device with minimum loss of the laser pulse intensity.

This object is solved by a pulse stretching device using at least one diffraction grating for separating the wavelengths within a laser pulse wherein according to the present invention the at least one diffraction grating is a grating mirror according to the features outlined before.

This object is further solved by a pulse compression device using at least one diffraction grating for separating the wavelengths within a laser pulse wherein according to the present invention the at least one diffraction grating is a diffraction mirror according to one or more of the features of such a grating mirror outlined before.

The advantage of using a grating mirror as outlined before in a pulse stretching device and/or in a pulse compression device is to be seen in the fact that the high diffraction efficiency provides minimum intensity losses for the stretched laser pulse and/or the compressed laser pulse.

In particular an advantageous solution provides that this pulse stretching device and/or the pulse compression device use two grating mirrors for separating the wavelengths of a laser pulse to be stretched or compressed.

In such a device the high diffraction efficiency provides minimum intensity losses for the stretched light pulse or the compressed light pulse compared to use of conventional diffraction gratings.

Further features and advantages are explained in connection with the subsequent detailed description and the drawings.

In the drawings:

Fig. 1      shows a sectional view of a first embodiment of a grating mirror;

Fig. 2    a schematic representation of the arrangement of the first embodiment of the grating mirror in Littrow mount;

Fig. 3    a schematic representation of the diffraction efficiency of the first embodiment of the grating mirror under Littrow mount for TE and TM polarization depending on the respective Littrow wavelength;

Fig. 4    a schematic representation of the diffraction efficiency of the first embodiment of the grating mirror depending on the wavelength in the minus first order Littrow mount for the respective Littrow wavelength;

Fig. 5    a representation of the dependency of the layer thickness (values in nm indicated in the curved lines) from the duty cycle (vertical axis) and grating period (horizontal axis) of the high refractive index grating layer;

Fig. 6    a representation of the dependency of the layer thickness (values in nm indicated in the curved lines) from the duty cycle (vertical axis) and the grating period (horizontal axis) for the low refractive index layer;

Fig. 7    a sectional view similar to Fig. 1 of a second embodiment of the grating mirror according to the present invention;

Fig. 8    a sectional view similar to Fig. 1 of a third embodiment of the grating mirror according to the present invention;

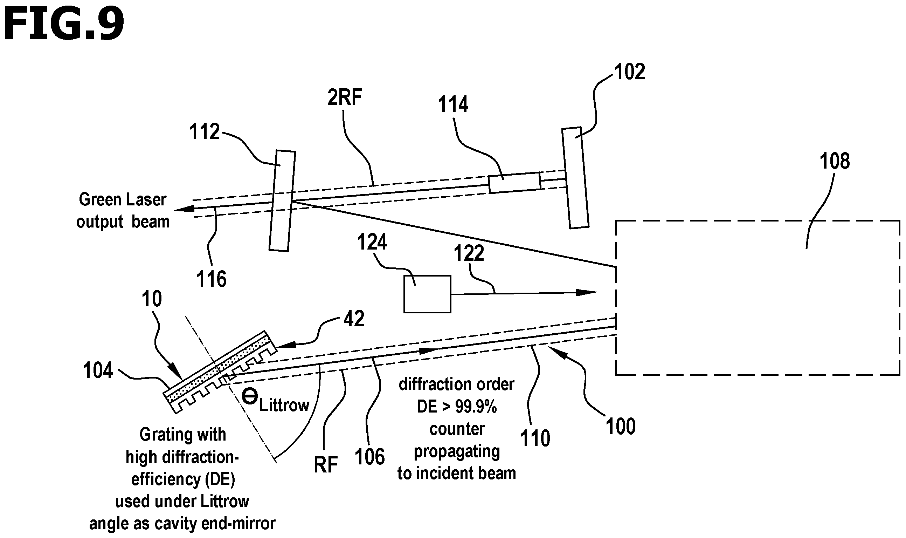

Fig. 9    a schematic representation of a laser system having a grating mirror according to the present invention as one cavity end mirror.

Fig. 10    a schematic representation of a pulse stretching device using grating mirrors according to the present invention and

Fig. 11    a schematic representation of a pulse compression device using grating mirrors according to the present invention.

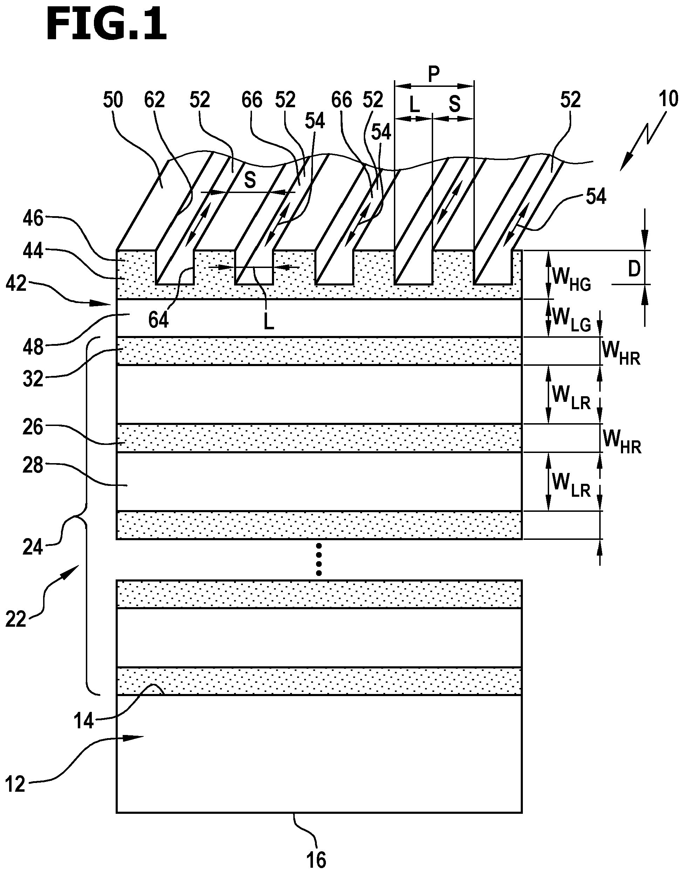

A first embodiment of a grating mirror 10 according to the present invention as shown in Fig. 1 comprises a substrate 12 having a first surface 14 and a second surface 16, the first surface 14 and the second surface 16 being arranged on opposite sides of said substrate 12.

Further the grating mirror 10 comprises a reflector 22 arranged on the first surface 14 of said substrate 10 and comprising a stack 24 of reflector layers 26 and 28 arranged in said stack 24 in an alternating arrangement.

For example reflector layer 26 is a layer of a high refractive index material whereas reflector layer 28 is a layer of a low refractive index material.

The reflector layers 26 and 28 have a thickness $W_{HR}$, $W_{LR}$ in the range between 100 nm or more and 250 nm or less and are adapted to the wavelength to be reflected.

In particular the thickness $W_{HR}$ and $W_{LR}$ of layers 26 and 28 corresponds to a quarter of the wavelength to be reflected taking into consideration the angle of incidence.

The specific values of $W_{HR}$ and $W_{LR}$ can be calculated according to the following formulas.

Quarter wave layer thickness $W_{H/L}$ for high (H) and low (L) refractive index layer:

$$W_{H/L} = \frac{\lambda}{4\, n_{H/L}\, \cos(\theta_{H/L})}$$

with

$$\theta_{H/L} = sin^{-1}\left(\frac{n_{incident}}{n_{H/L}}\, \sin(\theta_{incident})\right)$$

and

$\lambda$:        operation wavelength of mirror

$n_{H/L}$:     refractive index of high index layer (H) and low index layer (L)

$n_{incident}$:    refractive index of medium of incident beam

$\theta_{incident}$:    angle of incident beam

Example:

$$\lambda = 1030 \text{ nm}, \theta_{incident} = 50°, n_{incident} = 1 \text{ (air)}, n_H = 2.12, n_L = 1.45$$
$$\Rightarrow W_H = 209 \, nm$$
$$\Rightarrow W_L = 129 \, nm$$

$W_L$, $W_H$, $\theta_L$ and $\theta_H$ depend on the operating wavelength for which the grating mirror is designed, as well as the refractive indices $n_H$ and $n_L$ set by the coating technology chosen.

However a grating mirror as explained be can adapted to any other wavelength by adapting the quarter wave layers and the grating layers.

According to the present invention reflector 22 can be arranged with a high refractive reflector index layer 26 or with a low refractive index reflector layer 28 directly abutting on the first surface 14 of substrate 12.

In an advantageous version of the design as shown in Fig. 1 reflector 22 has a high refractive index reflector layer 26 being directly abutting on first surface 14 of substrate 12.

In an advantageous embodiment as shown in Fig. 1 the uppermost layer 32 of reflector 22 is a reflector layer 26 of a high refractive index material.

Uppermost layer 32 of reflector 22 which is arranged opposite to substrate 12 supports a grating 42 which in the advantageous embodiment according to Fig. 1 comprises a stack 44 of two layers 46 and 48 one being a high refractive index grating layer and the other being a low refractive index grating layer.

In the advantageous embodiment according to which uppermost layer 32 of reflector 22 is of high refractive index material grating 42 comprises low refractive index grating layer 48 as bottom layer which is directly arranged on uppermost layer 32 and high refractive index grating layer 46 as top layer extending from low refractive index layer 48 up to a top surface 50 of grating 42.

Grating 42 is designed as a waveguide grating and comprises a plurality of grooves 52 each groove 52 extending in a longitudinal direction 54 with all longitudinal directions 54 of all grooves 52 extending parallel to each other and all grooves being arranged at a certain distance from each other.

Since grating 42 is arranged on stack 24 of reflector layers 26, 28 the electromagnetic field of an incident radiation extends into grating 42 by extending into and penetrating grating layers 46, 48 and also at least partially into the upper two to five layers 26, 28 of reflector 22 arranged closest to grating 42 in the form of an evanescent field so that a waveguide effect with a direction of guidance extending parallel to said top surface 50 is obtained by excitation of said evanescent field in said grating layers 46, 48 and said upper layers 26, 28 of reflector 22.

In particular each groove 52 comprises two side surfaces 62, 64 extending essentially parallel to longitudinal direction 54 and also extending from top surface 50 and transverse to top surface 50 into grating 42 down to a bottom surface 66 of the respective groove 52.

The distance, at which bottom surface 66 is arranged inside grating 42 and apart from top surface 50 defines a depth D of the respective groove 52 and the distance between the side surfaces 62 and 64 in a direction transverse to longitudinal directions 54 defines a lateral extension L of the respective groove 52.

Further the distance S between adjacent but separated grooves 52 defines the extension of the section of the top layer 46 of grating 42 arranged between two adjacent grooves 52 in a direction transverse to longitudinal directions 54, said section of said top layer 46 carrying a section of top surface 50.

The sum of the distance S between two adjacent grooves 52 and the lateral extension L of each groove 52 results in a periocity P of grating 42 and this periocity P together with the lateral extension L of each groove 52 and the lateral distance S between adjacent grooves 52 as well as the depth D of said grooves 52 define the optical behavior of grating 42.

According to one embodiment of the invention shown in Fig. 1 all grooves 52 show essentially the same depth D as well as essentially the same lateral width L and all grooves 52 are arranged essentially at the same lateral distance S from each other.

According to the first embodiment the present invention depth D of grooves 52 is selected such that grooves 52 extend exclusively in uppermost layer 46 which according to the first embodiment is the high refractive index layer grating 46 of grating 42.

Grooves 52 are preferably obtained by etching top layer 46 and thereby removing material of top layer 46 in the areas where grooves 52 appear during the etching process.

The duty cyle F of grating 42 is defined to be $$F = \frac{S}{P}$$ .

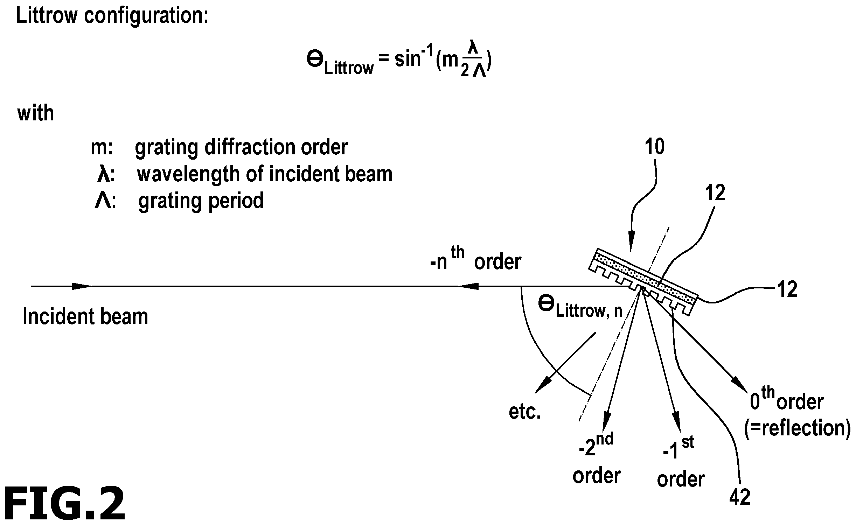

Grating mirror 10 can be used as diffraction grating in Littrow configuration, which Littrow configuration is explained in Fig. 2.

The Littrow configuration is defined by the formula

$$\theta_{Littrow} = sin^{-1}\left(m\frac{\lambda}{2\,\Lambda}\right)$$

with

m:    grating diffraction order

$\lambda$:    wavelength of incident beam

$\Lambda$:    *grating period*

Littrow configuration means that an incident beam is reflected back into itself by grating 42 with maximum diffraction efficiency in one specific order of diffraction of grating 42.

This means that an incident beam I hits grating 42 of grating mirror 10 in the specific Littrow angle $\Theta$ which is a Littrow angle of the $-n^{th}$ diffraction order so that under this angle $\Theta$ the incident beam is counter propagating in itself with maximum diffraction efficiency.

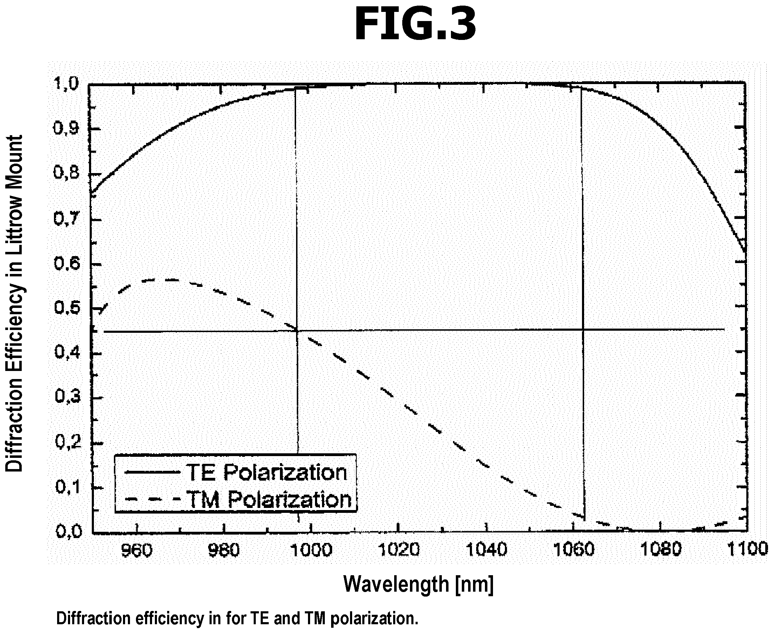

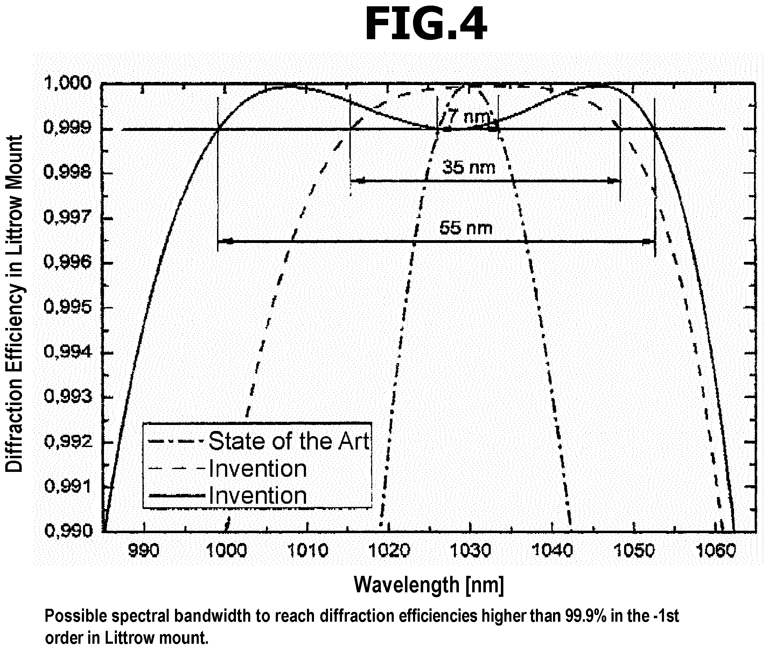

For example grating mirror 10 is used in the minus first order Littrow mount in which a diffraction efficiency of more than 0,999 is obtained at the respective Littrow wavelengths within a broad spectral bandwidth in particular in a TE polarization mode as can be seen from Figures 3 and 4.

A further advantage of the grating mirror according to the present invention when used in Littrow mount is shown in table 1 which demonstrates that the grating mirror according to the first embodiment 10 is highly design tolerant so that manufacturing of these grating mirrors can be done in a cost efficient manner.

In order to obtain a maximum diffraction efficiency in the respective Littrow mount the thickness of grating layers 46 and 48 has to be adapted.

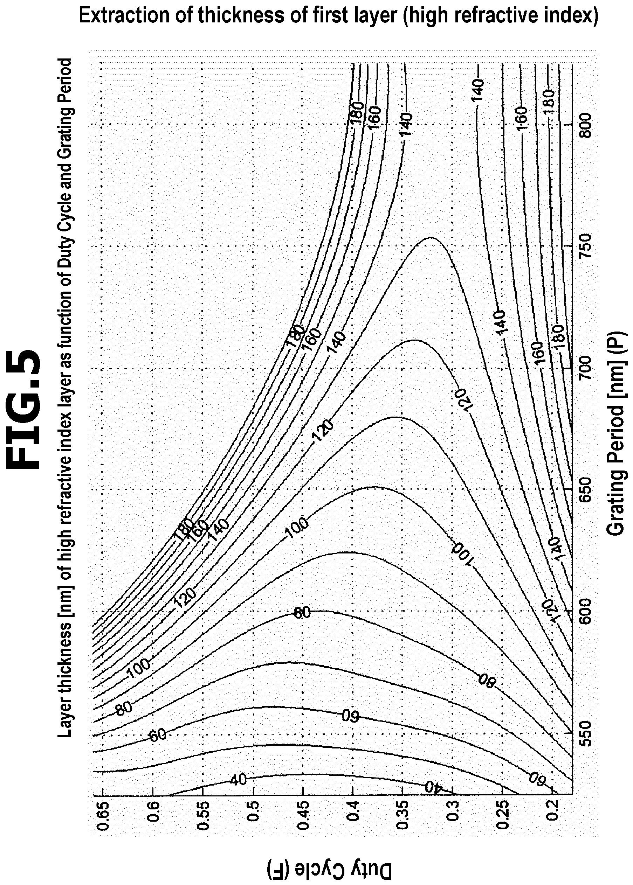

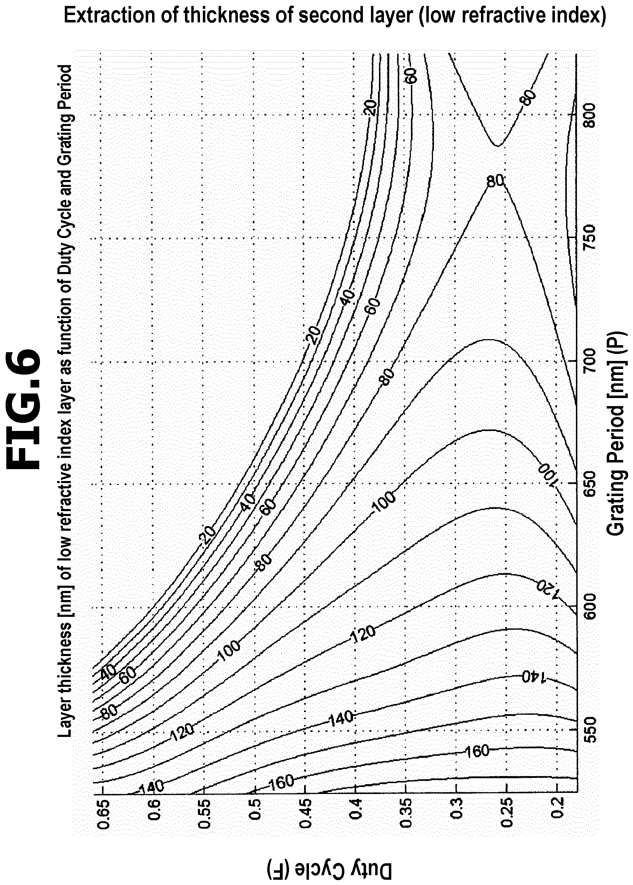

The thickness $W_{HG}$ of grating layer 46 with a high refractive index can be extracted from Fig. 5 and the thickness $W_{LG}$ of grating layer 48 with a low refractive index can be extracted from Fig. 6. Fig. 5 and Fig. 6 show the dependency of the thickness of layers 46, 48 (values for the respective thickness indicated in nm in the curved lines) from duty cycle F (vertical axis) and grating period P (horizontal axis) for a Littrow mount with maximum diffraction efficiency in the minus first order at 1030nm.

The optimization can also be performed for a maximum of diffraction efficiency at other wavelengths.

The grating mirror design can be transferred to any wavelength region where resonant waveguide gratings can be realized such as the $10\mu$m domain for CO2 lasers by choosing suitable materials for quarterwave layers and grating layers and adapting the grating profiled.

High refractive index materials used for the respective layers of reflector 22 and grating 42 in the near infrared and infrared region are materials having a refractive index between 2,0 and 2,6. In particular these materials comprise $Ta_2O_5$, $HfO_2$, $Nb_2O_5$, $TiO_2$, $Al_2O_3$, $Si_3Ni_4$ and a:Si.

Low refractive index materials used for the respective layers of reflector 22 and grating 42 are materials having a refractive index in the range between 1,4 and 1,6. In particular these materials comprise $SiO_2$, $MgF_2$.

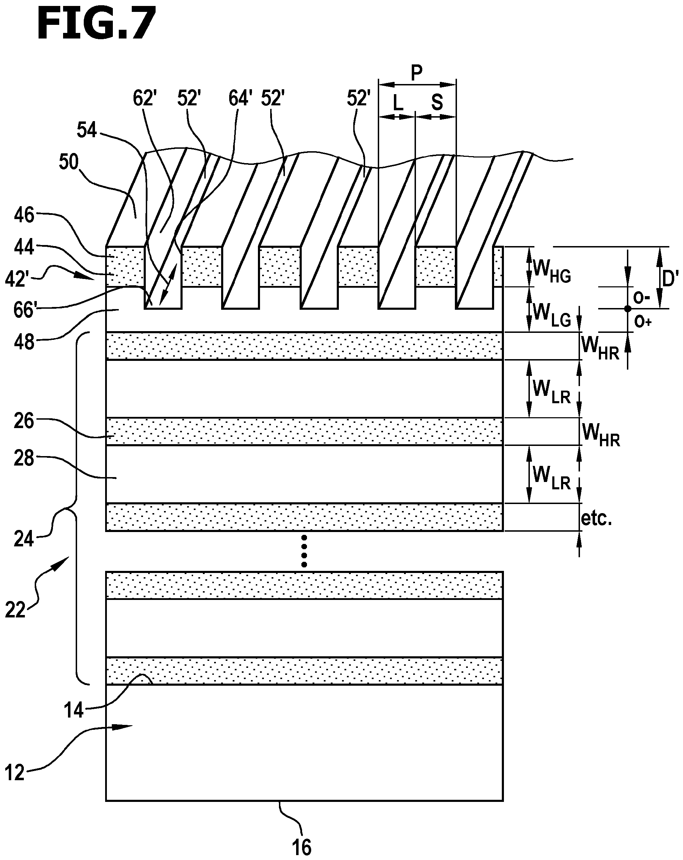

In a second embodiment of grating mirror 10', shown in Fig. 7, substrate 12 and reflector 22 are identical with the first embodiment.

According to the second embodiment grating 42' comprises grating layer 46 as high refractive index layer and grating layer 48 as low refractive index layer made of the same material as disclosed in connection with the first embodiment.

However in contrast to the first embodiment of grating mirror 10 depth D of grooves 52' is enhanced in the second embodiment of grating mirror 10'. According to the second embodiment depth D extends from top surface 50 into grating 42' to an extend that grooves 52' fully extend through layer 46 and partially into layer 48 so that the bottom surface 66' of the grooves 52' is arranged in layer 46 having a low refractive index.

The other parameters of reflective grating 42' are defined in the same manner as disclosed in connection with the first embodiment.

In particular the periodicity P the lateral extension L of grooves 52' and the distance S between adjacent grooves 52' are selected as defined in connection with the first embodiment.

Grating mirror 10' according to the second embodiment shows the same behavior in Littrow mount as grating mirror 10 according to the first embodiment.

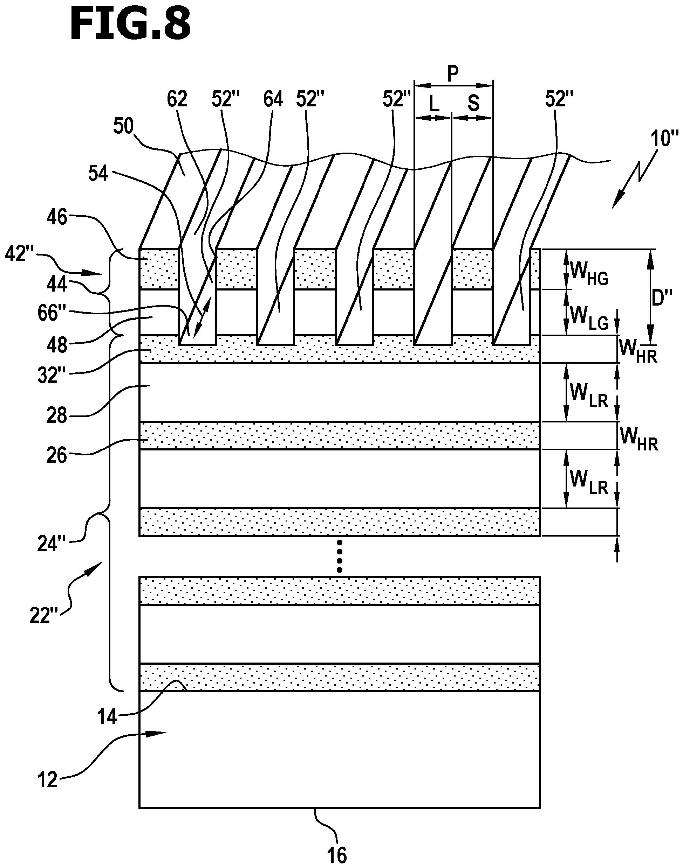

In a third embodiment of the grating mirror 10" as shown in Fig. 8 the thicknesses of reflector layers 26 and 28, the arrangement of reflector layers 26 and 28 and the materials of reflector layers 26 and 28 are selected as disclosed in connection with the first embodiment.

According to the third embodiment of grating mirror 10" shown in Fig. 8, grating 42" comprises still two grating layers 46, 48 with grating layer 46 made of high refractive index material being the top layer, and grating 48 arranged below grating layer 46 being of low refractive index material. According to the third embodiment grating 42" comprises grooves 52" extending from top surface 50 into grating 42" with a depth D" having such a dimension that bottom surface 66" of grooves 52" is arranged within uppermost layer 32" of reflector 22" so that grooves 52" extend through top layer 46 made of high refractive index material, through grating layer 48 made of low refractive index material and into uppermost layer 32" of reflector 22 made of high refractive index material.

Further parameters such as periocity P of grating 22", duty cycle F of grating 42" as well as lateral extension L of grooves 52" and distance S between adjacent grooves 52" are selected as explained in connection with the first embodiment.

All elements of the second embodiment and the third embodiment which are not explained explicitly and which are provided with the same reference signs as in the first embodiment correspond to those of the first embodiment so that with respect to these elements reference is made to the explanations given in connection with the first embodiment.

One characteristic feature of all three embodiments 10, 10' and 10" of grating mirror as explained before is to be seen in the fact that the depth D of grooves 52, 52' and 52" is within the range from 100 nm or more up to 300 nm or less and further all gratings 42, 42' and 42" are provided with aspect ratios between 0,14 or more and 1,1 or less, whereas the aspect ratio is defined by the lateral width L of grooves 52, 52' and 52" divided by the depth D, D' or D" of the respective grooves 52, 52', 52".

Such aspect ratios contributing to the good design parameter tolerance of the grating mirrors according to the present invention.

Grating mirrors according to the present invention can be used in various applications.

For example one of grating mirrors 10, 10' and 10" can be used in a laser system.

In such a laser system a laser cavity 100 comprises for example one cavity end mirror 102 and grating mirror 10 according to the present invention arranged as the other cavity end mirror 104 with grating mirror 10 being arranged in Littrow mount with respect to an optical axis 106 of a cavity radiation field RF extending between cavity end mirrors 102 and 104 within cavity 100.

Further cavity 100 is provided with a laser active material 108, for example a thin disk used as a folding mirror, and an output coupler 112 also used a folding mirror for cavity radiation field RF within cavity 100.

Grating mirror 10 used as second cavity end mirror 104 with its high diffraction efficiency above 99,9% and its polarization efficiency for the TE polarization enables a high amplification with stabilized polarization and stabilized narrow laser emission bandwidth of the cavity radiation field RF within cavity 100.

If a second harmonic generation crystal 114 is placed between cavity end mirror 102 and output coupler 112 which is transparent for a second harmonic radiation field the second harmonic radiation field generated by second harmonic generation crystal 114 can leave cavity 100 through output coupler 112 as output beam 116 so that an efficient laser source for green light laser at high power is provided.

If for example the laser active material 108 is pumped by a pumping beam 122 of a pumping light source 124 it is possible to obtain a conversion efficiency of up to 40% or in particular even up to 50% or higher which means that the power of output laser beam 116 comprising the second harmonic radiation field can amount to up to 40% or more of the power of pumping radiation beam 122.

Grating mirrors according to the present invention can be also used for laser pulse stretching and laser pulse compression due to their high diffraction efficiency.

For pulse stretching and pulse compression the propagation of a laser pulse in a dispersive medium, in the present case represented by a diffraction grating mirror, introduces a phase modulation of its field components, e.g. the E-field of the light pulse.

Using a diffraction grating enables a spectral modification of the optical path length for each spectral component of the light pulse and the possibility to modify the optical path length for the various spectral components of a light pulse can be used to stretch or compress a light pulse.

The theoretical explanations for laser pulse stretching and laser pulse compression are outlined in "Simon Hooker and Colin Webb: Laser Physics, Oxford University Press (2010) ISBN-13: 978-0198506928", which book is herewith incorporated by reference.

For laser pulse stretching and laser pulse compression grating mirrors according to the present invention and optimized according to Littrow conditions can be used as diffraction gratings but then the grating mirrors have to be mounted such that the incident laser pulse deviates for the Littrow angle of incidence by some degrees, such as for example 2° to 6°, so that as a consequence the maximum of diffraction of the minus first order does not coincide with the incident beam.

However it is also possible to optimize grating mirrors according to the present invention such that the maximum of diffraction appears under a certain angle $\Theta_c$ with a diffraction efficiency essentially identical with the diffraction efficiency outlined before. In this case the thickness of layers 46 and 48 has to be adjusted and is in the range between 20 nm and 400 nm. The duty cycle F and grating period P are in the same dimension as defined earlier.

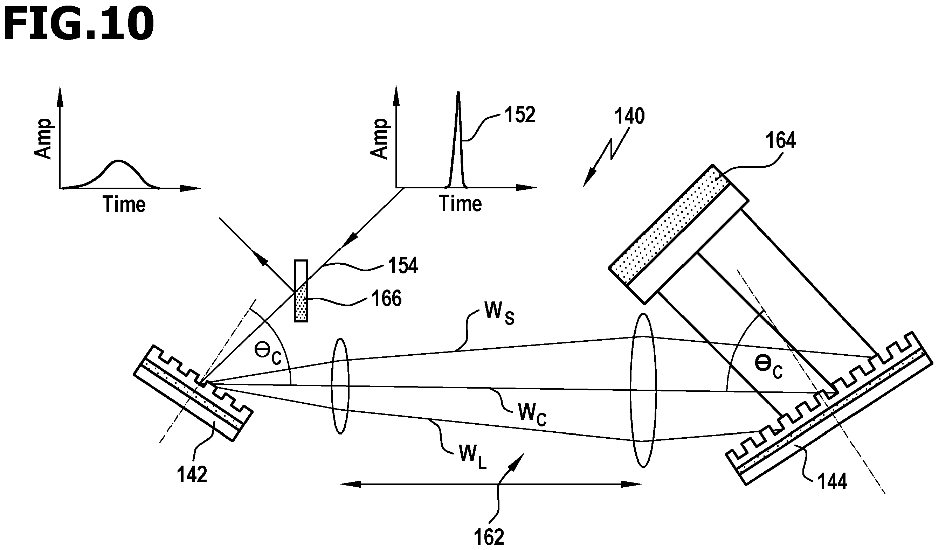

Fig. 10 shows one example of a laser pulse stretching device 140 using grating mirrors 142 and 144 as diffraction gratings which are designed by use of the concepts for gratings mirrors 10, 10' and 10" according to the present invention.

The design of grating mirrors 142 and 144 concerning the angle $\Theta_c$ at which a maximum of diffraction appears with respect to a spectral component represented by a central wavelength $W_c$ of an incident laser pulse 152 is based on the design concepts as outlined before and the angle $\Theta_c$ is the same at both grating mirrors 142, 144.

The grating mirrors 142 and 144 are arranged antiparallel with respect to each other and a laser pulse 152 incident along a path 154 is diffracted by grating mirror 142 under various angles which are different for different spectral components of laser pulse 152 having different wavelengths, so that for example the central wavelength $W_c$ of laser pulse 152 is diffracted under the angle $\Theta_c$ and a longer wavelength $W_L$ in laser pulse 152 is diffracted with an angle $\Theta_L$ greater than $\Theta_c$ whereas a shorter wavelength $W_s$ of laser pulse 152 is diffracted with an angle $\Theta_s$ smaller than $\Theta_c$.

All exemplary wavelengths $W_c$, $W_L$, $W_s$ are imaged by a confocal imaging system 162 onto diffraction grating 144 which diffracts all wavelengths $W_c$, $W_L$, $W_s$ such that all wavelengths $W_c$, $W_L$, $W_s$ propagate in parallel towards a reflector 164 which reflects back all wavelengths $W_c$, $W_L$, $W_s$ so that all wavelengths $W_c$, $W_L$, $W_s$ travel back the same path to diffraction gratings 142 and 144 and back on path 154, forming a stretched laser pulse 156 which can be separated from the incident laser pulse 152 by a decoupling device 166.

Stretching of laser pulse 152 to laser pulse 156 occurs due to the difference in the light paths for the central wavelength $W_c$ the longer wavelengths $W_L$ and the shorter wavelengths $W_s$ when travelling from grating mirror 142 to grating mirror 144 to reflector 164 and back to grating mirror 144 and grating mirror 142.

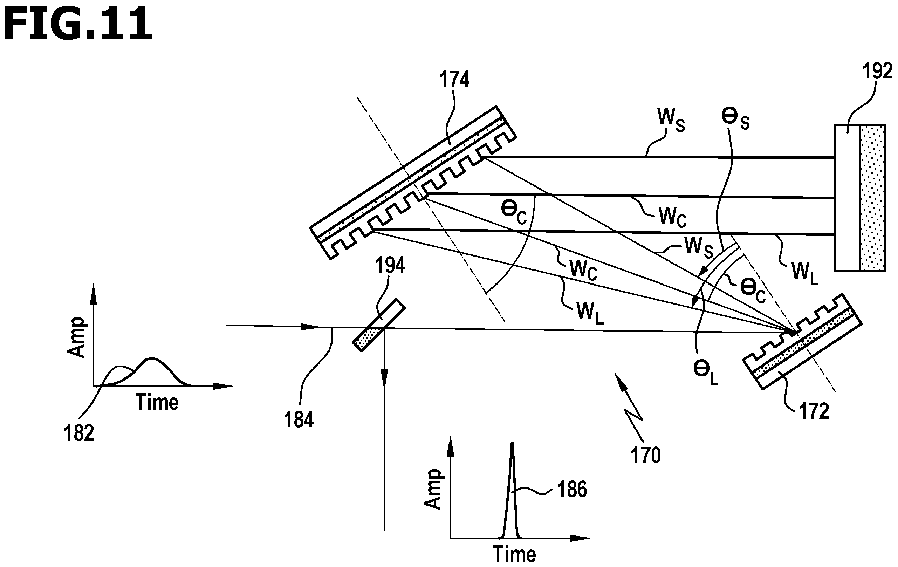

Based on similar concepts pulse compression can be obtained by a pulse compression device 170 shown in Fig. 11.

This pulse compression device 170 comprises two diffraction gratings designed by use of the concepts for grating mirrors 10, 10' and 10" according to the present invention.

The design of grating mirrors 172 and 174 concerning the angles $\Theta$ at which a maximum of diffraction appears with respect to a central wavelength $W_L$ of an incident laser pulse 182 is based on the design concepts as outlined before and the angle $\Theta_c$ is the same at both grating mirrors 172, 174.

The grating mirrors 172 and 174 are arranged parallel to each other and the laser pulse 182 along path 184 hits diffraction grating 172 which diffracts a central wavelength $W_c$ of laser pulse 182 at an angle $\Theta_c$ but a longer wavelength $W_L$ at an angle $\Theta_L$ and a shorter wavelength at an angle $\Theta_S$ so that the paths of the various wavelengths $W_c$, $W_L$, $W_s$ are separated.

These separated wavelengths $W_c$, $W_L$, $W_s$ hit diffraction grating 174 and are again diffracted at separate angles $\Theta_c$, $\Theta_L$, $\Theta_s$ such that the diffracted wavelengths $W_c$, $W_L$, $W_s$ propagate from grating mirror 174 on parallel paths to a reflector 192 and are reflected back so that they propagate on the identical paths back to diffraction grating 174 and diffraction grating 172 and back on path 184.

Due to the difference in the propagating paths from diffraction grating 172 to diffraction grating 174 to mirror 192 and back to diffraction gratings 174 and 172 on path 184 a compressed light pulse 186 is formed which is decoupled by a decoupling device 194.

The advantage of using grating mirrors 10, 10' and 10" according to the present invention as diffraction gratings has to be seen in the high diffraction efficiency of more than 0,999 which is important due to the fact that the laser pulses 152 and 182 in the stretching device 140 and in the compression device 170 respectively are diffracted several times, e.g. four times, so that the obtained pulse intensity is significantly affected by the diffraction efficiency.

**Table 1**

| The structure of the present invention allows parameter deviations shown in Table 1 to still reach diffraction efficiencies > 99.8% in the -1st order. |||
|---|---|---|
| **Table 1: Design tolerances** |||
| Parameter (see Figure 14) | Symbol | Tolerable deviation |
| Etching depth (i.e. grating depth) | $\mathcal{D}$ | $\pm$ 61.5% |
| Grating Period | $\mathcal{P}$ | $\pm$ 2.1% |

(continued)

The structure of the present invention allows parameter deviations shown in Table 1 to still reach diffraction efficiencies > 99.8% in the -1st order.

**Table 1: Design tolerances**

| Parameter (see Figure 14) | Symbol | Tolerable deviation |
|---|---|---|
| Duty-cycle | $f$ | ± 8.5% |
| Thickness top layer (high index) | $W_{HG}$ | ± 8.5% |
| Thickness bottom layer (low index) | $W_{LG}$ | ± 20.65% |
| Thickness top and bottom layer at the same time | | ± 5.95% |
| Refractive index top layer (high index) | | ± 2.05% |
| Refractive index bottom layer (low index) | | ± 42.2% |
| Refractive index top and bottom layer at the same time | | ± 2.05% |

**Claims**

1. Grating mirror comprising a substrate (12) having a first (14) and a second (16) surface on opposite sides thereof,

   a reflector (22) arranged on the first surface (14) of said substrate (12) and comprising a stack (24) of reflector layers (28) with high refractive index layers (26) and low refractive index layers (28) stacked in alternating arrangement,
   a grating (42) arranged on a side of said reflector (22) opposite to said substrate (12),
   said grating (42) comprising a stack (44) of grating layers (46, 48) with at least one high refractive index grating layer (46) and at least one low refractive index grating layer (48) stacked in alternating arrangement, said stack (44) of grating layers (46, 48) having grooves (52) etched from a top surface (50) into said stack (44) of grating layers (46, 48) with an etching depth (D) between 40 nm or more and 300 nm or less, **characterized in that** said grating is designed to obtain a waveguide grating structure, and that said grating (42) is arranged on an uppermost layer (32) of said reflector (22), and that an evanescent radiation field of incident radiation extends into said grating layers (46, 48) and upper layers (26, 28) of said reflector (22) forming a waveguide for said incident radiation field with a direction of guidance extending parallel to said top surface (50) of said stack (44) of grating layers (46, 48) so that the grating mirror acts as a waveguide grating and each of the reflector layers (26, 28) have a thickness between 100 nm
   and 250 nm.

2. Grating mirror according to claim 1, wherein said stack (44) of grating layers (46, 48) comprises at least two grating layers, and wherein in particular said stack (44) of grating layers (46, 48) comprises three grating layers at maximum.

3. Grating mirror according to one of the preceding claims, wherein said stack (44) of grating layers (46, 48) has at least a top layer (46) etched, said top layer (46) being arranged a side of said stack (44) opposite to said reflector (22), and wherein in particular said stack (44) of grating layers (46, 48) has said top layer (46) fully etched.

4. Grating mirror according to claim 3, wherein said stack (44) of grating layers (46, 48) has said top layer (46) fully etched and said layer (48) below said top layer (46) at least partially etched, and wherein in particular said stack (44) of grating layers (46, 48) has said top layer (46) and said layer (48) below said top layer (46) fully etched.

5. Grating mirror according to one of the preceding claims, wherein said grating (42) has an aspect ratio between 0,14 and 1,1.

6. Grating mirror according to one of the preceding claims, wherein the grating layers (46, 48) have a thickness between 5 nm and 200 nm, wherein in particular the top grating layer (46) has a thickness between 5 nm and 200 nm and wherein in particular the bottom grating layer (48) has a thickness between 5 nm and 200 nm.

7. Grating mirror according to one of the preceding claims, wherein the grating has a periodicity (P) between 520 nm and 860 nm.

8. Grating mirror according to one of the preceding claims, wherein the grating has a duty cycle (F) between 0,19 and 0,66.

9. Grating mirror according to one of the preceding claims, wherein said reflector layers (26, 28) are dimensioned to have a thickness corresponding to a quarter of the reflected wavelength.

10. Grating mirror according to one the preceding claims, wherein the grating layers (46, 48, 49) and the reflector layers (26, 28) comprise $Ta_2O_5$, $HfO_2$, $Nb_2O_5$, $TiO_2$, $Al_2O_3$, $Si_3N_4$ and a:Si as high refractive index material and $SiO_2$, $MgF_2$ as low refractive index materials.

11. A laser system having a laser cavity (100) defining a cavity radiation field (RF) extending along an optical axis (106) between cavity end mirrors (102, 104) of said cavity (100) and

a laser active material (108) arranged to be penetrated by said cavity radiation field (RF)
**characterized in that** at least one of said cavity end mirrors (102, 104) is a grating mirror (10) according to one or more of claims 1 to 10 and arranged in Littrow mount with respect to the optical axis (106) of said cavity radiation field (110).

12. A laser system according to claim 11, wherein a second harmonic generator (114) is arranged in said cavity radiation field (RF) and creates a second harmonic radiation field (2RF), and wherein in particular said second harmonic radiation field is coupled out from said laser cavity.

13. A pulse stretching device (140) using at least one diffraction grating (142, 144) for separating the wavelengths within a light pulse (152), **characterized in that** the at least one diffraction grating (142, 144) is a grating mirror (10) according to one or more of claims 1 to 10.

14. A pulse compression device (170) using at least one diffraction grating (17, 174) for separating the wavelengths within a light pulse (182) **characterized in that** the at least one diffraction grating (172, 174) is a grating mirror according to one or more of claims 1 to 10.

**Patentansprüche**

1. Gitterspiegel, umfassend ein Substrat (12), das eine erste (14) und eine zweite (16) Oberfläche auf gegenüberliegenden Seiten davon aufweist,

einen Reflektor (22), der auf der ersten Oberfläche (14) des Substrats (12) angeordnet ist und einen Stapel (24) von Reflektorschichten (28) mit Schichten (26) mit hohem Brechungsindex und Schichten (28) mit niedrigem Brechungsindex umfasst, die in abwechselnder Anordnung gestapelt sind,
ein Gitter (42), das auf einer dem Substrat (12) gegenüberliegenden Seite des Reflektors (22) angeordnet ist, das Gitter (42) umfassend einen Stapel (44) von Gitterschichten (46, 48) mit mindestens einer Gitterschicht (46) mit hohem Brechungsindex und mindestens einer Gitterschicht (48) mit niedrigem Brechungsindex, die in abwechselnder Anordnung gestapelt sind, wobei der Stapel (44) von Gitterschichten (46, 48) Rillen (52) aufweist, die von einer oberen Oberfläche (50) in den Stapel (44) von Gitterschichten (46, 48) mit einer Ätztiefe (D) zwischen 40 nm oder mehr und 300 nm oder weniger geätzt sind,

**dadurch gekennzeichnet, dass** das Gitter ausgelegt ist, um eine Wellenleitergitterstruktur zu erhalten, und **dass** das Gitter (42) auf einer obersten Schicht (32) des Reflektors (22) angeordnet ist, und **dass** sich ein evaneszentes Strahlungsfeld einfallender Strahlung in die Gitterschichten (46, 48) und oberen Schichten (26, 28) des Reflektors (22) erstreckt, was einen Wellenleiter für das einfallende Strahlungsfeld mit einer Führungsrichtung ausbildet, die sich parallel zu der oberen Oberfläche (50) des Stapels (44) von Gitterschichten (46, 48) erstreckt, so dass der Gitterspiegel als ein Wellenleitergitter wirkt und jede der Reflektorschichten (26, 28) eine Dicke zwischen 100 nm und 250 nm aufweist.

2. Gitterspiegel nach Anspruch 1, wobei der Stapel (44) von Gitterschichten (46, 48) mindestens zwei Gitterschichten umfasst, und wobei insbesondere der Stapel (44) von Gitterschichten (46, 48) maximal drei Gitterschichten umfasst.

3. Gitterspiegel nach einem der vorstehenden Ansprüche, wobei der Stapel (44) von Gitterschichten (46, 48) mindestens eine geätzte Deckschicht (46) aufweist, wobei die Deckschicht (46) auf einer dem Reflektor (22) gegenüberliegenden Seite des Stapels (44) angeordnet ist, und wobei insbesondere die Deckschicht (46) des Stapels (44) von Gitterschichten (46, 48) vollständig geätzt ist.

4. Gitterspiegel nach Anspruch 3, wobei der Stapel (44) von Gitterschichten (46, 48) die Deckschicht (46) vollständig geätzt und die Schicht (48) unter der Deckschicht (46) mindestens teilweise geätzt aufweist, und wobei insbesondere der Stapel (44) von Gitterschichten (46, 48) die Deckschicht (46) und die Schicht (48) unter der Deckschicht (46) vollständig geätzt aufweist.

5. Gitterspiegel nach einem der vorstehenden Ansprüche, wobei das Gitter (42) ein Aspektverhältnis zwischen 0,14 und 1,1 aufweist.

6. Gitterspiegel nach einem der vorstehenden Ansprüche, wobei die Gitterschichten (46, 48) eine Dicke zwischen 5 nm und 200 nm aufweisen, wobei insbesondere die Gitterdeckschicht (46) eine Dicke zwischen 5 nm und 200 nm aufweist und wobei insbesondere die untere Gitterschicht (48) eine Dicke zwischen 5 nm und 200 nm aufweist.

7. Gitterspiegel nach einem der vorstehenden Ansprüche, wobei das Gitter eine Periodizität (P) zwischen 520 nm und 860 nm aufweist.

8. Gitterspiegel nach einem der vorstehenden Ansprüche, wobei das Gitter einen Arbeitszyklus (F) zwischen 0,19 und 0,66 aufweist.

9. Gitterspiegel nach einem der vorstehenden Ansprüche, wobei die Reflektorschichten (26, 28) bemessen sind, um eine Dicke aufzuweisen, die einem Viertel der reflektierten Wellenlänge entspricht.

10. Gitterspiegel nach einem der vorstehenden Ansprüche, wobei die Gitterschichten (46, 48, 49) und die Reflektorschichten (26, 28) $Ta_2O_5$, $HfO_2$, $Nb_2O_5$, $TiO_2$, $Al_2O_3$, $Si_3N_4$ und ein: Si als Material mit hohem Brechungsindex und $SiO_2$, $MgF_2$ als Materialien mit niedrigem Brechungsindex umfassen.

11. Lasersystem, das einen Laserhohlraum (100) aufweist, der ein Hohlraumstrahlungsfeld (RF) definiert, das sich entlang einer optischen Achse (106) zwischen Hohlraumendspiegeln (102, 104) des Hohlraums (100) erstreckt, und

ein laseraktives Material (108), das angeordnet ist, um durch das Hohlraumstrahlungsfeld (RF) durchdrungen zu werden
**dadurch gekennzeichnet, dass** mindestens einer der Hohlraumendspiegel (102, 104) ein Gitterspiegel (10) nach einem oder mehreren der Ansprüche 1 bis 10 ist und in Bezug auf die optische Achse (106) des Hohlraumstrahlungsfelds (110) in einer Littrow-Montierung angeordnet ist.

12. Lasersystem nach Anspruch 11, wobei ein Generator (114) für eine zweite Harmonische in dem Hohlraumstrahlungsfeld (RF) angeordnet ist und ein Strahlungsfeld der zweiten Harmonischen (2RF) erzeugt, und wobei insbesondere das Strahlungsfeld der zweiten Harmonischen aus dem Laserhohlraum ausgekoppelt wird.

13. Impulsdehnungsvorrichtung (140), die mindestens ein Beugungsgitter (142, 144) zum Trennen der Wellenlängen innerhalb eines Lichtimpulses (152) verwendet, **dadurch gekennzeichnet, dass** das mindestens eine Beugungsgitter (142, 144) ein Gitterspiegel (10) nach einem oder mehreren der Ansprüche 1 bis 10 ist.

14. Impulskompressionsvorrichtung (170), die mindestens ein Beugungsgitter (17, 174) zum Trennen der Wellenlängen innerhalb eines Lichtimpulses (182) verwendet, **dadurch gekennzeichnet, dass** das mindestens eine Beugungsgitter (172, 174) ein Gitterspiegel nach einem oder mehreren der Ansprüche 1 bis 10 ist.

**Revendications**

1. Réflecteur en grille comprenant un substrat (12) ayant une première (14) et une seconde (16) surface sur ses côtés opposés,

   un réflecteur (22) disposé sur la première surface (14) dudit substrat (12) et comprenant une pile (24) de couches de réflecteur (28) avec des couches à indice de réfraction élevé (26) et des couches à faible indice de réfraction (28) empilées dans une disposition alternée,
   une grille (42) disposée sur une face dudit réflecteur (22) opposée audit substrat (12),
   ladite grille (42) comprenant une pile (44) de couches de grille (46, 48) avec au moins une couche de grille à indice de réfraction élevé (46) et au moins une couche de grille à faible indice de réfraction (48) empilées dans une disposition alternée, ladite pile (44) de couches de grille (46, 48) ayant des rainures (52) gravées à partir d'une surface supérieure (50) dans ladite pile (44) de couches de grille (46, 48) avec une profondeur de gravure (D) comprise entre 40 nm ou plus et 300 nm ou moins, **caractérisé en ce que** ladite grille est conçue pour obtenir une structure de grille de guide d'ondes, et que ladite grille (42) est disposée sur une couche supérieure (32) dudit réflecteur (22), et qu'un champ de rayonnement évanescent du rayonnement incident s'étend dans lesdites couches de grille (46, 48) et les couches supérieures (26, 28) dudit réflecteur (22) formant un guide d'ondes pour ledit champ de rayonnement incident avec une direction de guidage s'étendant parallèlement à ladite surface supérieure (50) de ladite pile (44) de couches de grille (46, 48) de sorte que le réflecteur en grille agit comme une grille de guide d'ondes et que chacune des couches de réflecteur (26, 28) a une épaisseur comprise entre 100 nm et 250 nm.

2. Réflecteur en grille selon la revendication 1, dans lequel ladite pile (44) de couches de grille (46, 48) comprend au moins deux couches de grille, et dans lequel, en particulier, ladite pile (44) de couches de grille (46, 48) comprend trois couches de grille au maximum.

3. Réflecteur en grille selon l'une quelconque des revendications précédentes, dans lequel ladite pile (44) de couches de grille (46, 48) a au moins une couche supérieure (46) gravée, ladite couche supérieure (46) étant disposée d'un côté de ladite pile (44) opposé audit réflecteur (22), et dans lequel, en particulier, ladite pile (44) de couches de grille (46, 48) a ladite couche supérieure (46) entièrement gravée.

4. Réflecteur en grille selon la revendication 3, dans lequel ladite pile (44) de couches de grille (46, 48) a ladite couche supérieure (46) entièrement gravée et ladite couche (48) sous ladite couche supérieure (46) au moins partiellement gravée, et dans lequel, en particulier, ladite pile (44) de couches de grille (46, 48) a ladite couche supérieure (46) et ladite couche (48) sous ladite couche supérieure (46) entièrement gravée.

5. Réflecteur en grille selon l'une quelconque des revendications précédentes, dans lequel ladite grille (42) présente un rapport d'aspect compris entre 0,14 et 1,1.

6. Réflecteur en grille selon l'une quelconque des revendications précédentes, dans lequel les couches de grille (46, 48) ont une épaisseur comprise entre 5 nm et 200 nm, dans lequel, en particulier, la couche de grille supérieure (46) a une épaisseur comprise entre 5 nm et 200 nm et dans lequel en particulier la couche de grille inférieure (48) a une épaisseur comprise entre 5 nm et 200 nm.

7. Réflecteur en grille selon l'une quelconque des revendications précédentes, dans lequel la grille a une périodicité (P) comprise entre 520 nm et 860 nm.

8. Réflecteur en grille selon l'une quelconque des revendications précédentes, dans lequel la grille a un rapport cyclique (F) compris entre 0,19 et 0,66.

9. Réflecteur en grille selon l'une quelconque des revendications précédentes, dans lequel lesdites couches réflectrices (26, 28) sont dimensionnées pour avoir une épaisseur correspondant au quart de la longueur d'onde réfléchie.

10. Réflecteur en grille selon l'une quelconque des revendications précédentes, dans lequel les couches de grille (46, 48, 49) et les couches de réflecteur (26, 28) comprennent $Ta_2O_5$, $HfO_2$, $Nb_2O_5$, $TiO_2$, $Al_2O_3$, $Si_3N_4$ et a: Si comme matériau à indice de réfraction élevé et $SiO_2$, $MgF_2$ comme matériaux à faible indice de réfraction.

11. Système laser ayant une cavité laser (100) définissant un champ de rayonnement de la cavité (RF) s'étendant le long d'un axe optique (106) entre les réflecteurs d'extrémité de cavité (102, 104) de ladite cavité (100) et

un matériau actif laser (108) disposé pour être pénétré par ledit champ de rayonnement de la cavité (RF) **caractérisé en ce qu'au** moins un desdits réflecteurs d'extrémité de cavité (102, 104) est un réflecteur en grille (10) selon l'une ou plusieurs des revendications 1 à 10 et disposé en montage Littrow par rapport à l'axe optique (106) dudit champ de rayonnement de cavité (110).

12. Système laser selon la revendication 11, dans lequel un générateur de seconde harmonique (114) est disposé dans le champ de rayonnement (RF) de la cavité et crée un champ de rayonnement de seconde harmonique (2RF), et dans lequel en particulier ce champ de rayonnement de seconde harmonique est couplé à la sortie de la cavité laser.

13. Dispositif d'étirement d'impulsion (140) utilisant au moins une grille de diffraction (142, 144) pour séparer les longueurs d'ondes dans une impulsion lumineuse (152), **caractérisé en ce que** l'au moins une grille de diffraction (142, 144) est un réflecteur en grille (10) selon l'une ou plusieurs des revendications 1 à 10.

14. Dispositif de compression d'impulsions (170) utilisant au moins une grille de diffraction (17, 174) pour séparer les longueurs d'onde dans une impulsion lumineuse (182) **caractérisé en ce que** l'au moins une grille de diffraction (172, 174) est un réflecteur en grille selon l'une ou plusieurs des revendications 1 à 10.

# FIG.1

Littrow configuration:

$$\Theta_{Littrow} = \sin^{-1}\left(m\frac{\lambda}{2\Lambda}\right)$$

with

m: grating diffraction order
$\lambda$: wavelength of incident beam
$\Lambda$: grating period

-n$^{th}$ order

Incident beam

$\Theta_{Littrow, n}$

etc.

-2$^{nd}$ order

-1$^{st}$ order

0$^{th}$ order (=reflection)

10

12

12

42

# FIG.2

EP 3 111 259 B1

# FIG.3

Diffraction efficiency in for TE and TM polarization.

# FIG.4

Possible spectral bandwidth to reach diffraction efficiencies higher than 99.9% in the -1st order in Littrow mount.

EP 3 111 259 B1

# FIG.5

Layer thickness [nm] of high refractive index layer as function of Duty Cycle and Grating Period

EP 3 111 259 B1

# FIG.6

Layer thickness [nm] of low refractive index layer as function of Duty Cycle and Grating Period

EP 3 111 259 B1

# FIG.7

# FIG.8

# FIG.9

EP 3 111 259 B1

# FIG.10

EP 3 111 259 B1

FIG.11

**EP 3 111 259 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009116790 A
- US 6219478 B1
- US 2006152809 A

**Non-patent literature cited in the description**

- Simon Hooker and Colin Webb: Laser Physics. Oxford University Press, 2010